# EUROPÄISCHE PATENTSCHRIFT

(11) **EP 0 538 191 B1**
(45) Veröffentlichungstag und Bekanntmachung des Hinweises auf die Patenterteilung: **03.01.1996**
(21) Anmeldenummer: 92810763.0
(22) Anmeldetag: 08.10.1992
(51) Int. Cl.: A47J 31/44, A47J 31/40

(54) **Kaffeemaschine**
Coffee machine
Cafetière

(30) Priorität: 17.10.1991 CH 3046/91
(43) Veröffentlichungstag der Anmeldung: 21.04.1993
(73) Patentinhaber: SINTRA HOLDING AG, CH-6210 Sursee (CH)
(72) Erfinder: Lüssi, André, CH-3084 Wabern (CH); Zurbuchen, Hans, CH-3084 Wabern (CH); Von Gunten, Jürg, CH-3506 Grosshöchstetten (CH)
(74) Vertreter: Fischer, Franz Joseph

(56) Entgegenhaltungen:
- EP-A- 0 154 206
- EP-A- 0 299 399
- EP-A- 0 486 435
- DE-A- 2 945 360
- FR-A- 2 312 998

## Beschreibung

Die vorliegende Erfindung bezieht sich auf eine Kaffeemaschine gemäss dem Oberbegriff des Patentanspruches 1.

Zum Zubereiten von Kaffee mit automatischen Kaffeemaschinen wird heute vielfach das sogenannte Druckbrühverfahren angewandt. Bei diesem wird heisses Wasser unter Druck durch in einer Brühkammer vorhandenes Kaffeepulver gefördert. Die vorliegende Erfindung bezieht sich insbesondere auf nach diesem Druckbrühverfahren arbeitende Kaffeemaschinen. Verschiedene davon sind auf dem Markt bereits bekannt. Je nach Anwendungsbereich, beispielsweise für den Haushalt oder den Gaststättenbereich, unterscheiden sich diese bekannten Kaffeemaschinen in ihrem Aufbau insbesondere im Hinblick auf Robustheit, Flexibilität im Ablauf des Verfahrens, Bedienungs-, Reinigungs- und Wartungskomfort etc.

Es ist allgemein bekannt, dass Teile in allen nach dem Druckbrühverfahren arbeitenden Kaffeemaschinen, die mit Kaffeepulver und/oder dem fertigen Getränk in Berührung kommen, einer gewissen Verschmutzung unterworfen sind und periodisch gereinigt werden müssen. Das Reinigen solcher Teile ist von Maschinentyp zu Maschinentyp unterschiedlich aufwendig und zeitintensiv. Je nach dem konstruktiven Aufbau einer Maschine ist bei Unterhalts- oder Reparaturarbeiten der Ausbau einzelner Teile mehr oder weniger kompliziert.

In der deutschen Offenlegungsschrift DE 29 45 360 ist eine automatische Kaffeemaschine, die nach dem Druckbrühverfahren arbeitet, offenbart, bei der auszuführende Wartungsarbeiten dadurch erleichtert werden, indem die wesentlichen Elemente der Kaffeemaschine in einer Art Schublade, welche aus der letzteren herausziehbar ist, untergebracht sind. Im Gehäuse der Kaffeemaschine selbst verbleiben als fest montierte Organe lediglich noch ein Wassertank und eine Steckdose zur Herstellung der elektrischen Verbindung zwischen Gehäuse und Schublade. Aus der Beschreibung der genannten deutschen Offenlegungsschrift geht in Verbindung mit den Zeichnungen unter anderem hervor, dass in der Schublade oder im Modul sowohl elektrische, elektromechanische als auch rein mechanische Teile untergebracht sind. Man kann sagen, dass die Schublade alle wesentlichen Organe und Bestandteile der Kaffeemaschine enthält. Dadurch werden diese Organe und Bestandteile, insbesondere für Wartungs- und Reparaturarbeiten leichter zugänglich als bei anderen Ausführungsformen derartiger Kaffeemaschinen. Für die periodische Reinigung der kaffeeführenden Elemente ist aber zum Beispiel die Brüheinrichtung als Bauteil jeweils abzumontieren bzw. aus der Schublade auszubauen, indem zuerst die elektrischen und hydraulischen Verbindungsleitungen gelöst und danach die Brüheinrichtung selbst durch Lösen der Befestigungsschrauben entfernt wird. Für einen periodisch auszuführenden Vorgang ist ein solches Vorgehen nachteilig. Im weiteren ist durch das gemeinsame Anordnen von elektrischen Strom führenden Teilen, und mit Wasser in Berührung kommenden Teilen, in der Schublade eine hohe Elektrisierungsgefahr vorgegeben.

In der französischen Patentanmeldung FR 2 312 998 ist eine Kaffeemaschine gezeigt, bei der lediglich eine Brüheinrichtung, insbesondere eine Zentrifuge, sowie der ihr zugeordnete Antriebsmotor auf einer gemeinsamen Grundplatte montiert sind. Diese Grundplatte ist als Schublade aus dem die Kaffeemaschine umgebenden Gehäuse herausziehbar. Die restlichen Teile der Kaffeemaschine verbleiben im Gehäuse angeordnet. Das Ziel der in dieser Schrift offenbarten Kaffeemaschine ist es, stärker störungsanfällige Bauelemente leicht austauschbar zu montieren.

In der europäischen Patentschrift EP 0 154 206 ist eine Vorrichtung zur Zubereitung von Heissgetränken, insbesondere von Kaffee offenbart, in welcher ein aus der Vorrichtung entfernbarer Baugruppenträger vorgesehen ist, in welchem alle der Verschmutzung durch Kaffeepulver und/oder dem fertigen Getränk ausgesetzten Teile zusammengefasst sind. Dies erleichtert die Handhabung bei der Reinigung der Vorrichtung, indem dazu lediglich der Baugruppenträger aus der Vorrichtung entnommen zu werden braucht. Da alle übrigen Teile fest in der Kaffeemaschine eingebaut sind, kann durch den gewählten Aufbau wohl für Reinigungszwecke ein entscheidender Vorteil erzielt werden, nicht jedoch für Service und Reparaturarbeiten. Ein Ausbau der übrigen Teile dürfte nicht unbedingt einfach sein. Ein Ueberprüfen der Funktion der Kaffeemaschine ist nur bei eingebautem Baugruppenträger möglich.

Es ist die Aufgabe der vorliegenden Erfindung, eine Kaffeemaschine zu schaffen, welche sowohl ein bequemes Reinigen der einer Verschmutzung durch Kaffeepulver und/oder durch das fertige Getränk unterworfenen Teile erlaubt, dank einem konstruktiv günstigen Aufbau ein einfaches Auswechseln einzelner Teile durch den Unterhalts- und Reparaturdienst gestattet, als auch ein einfaches Ueberprüfen der Funktionstüchtigkeit der Maschine ermöglicht.

Diese Aufgabe wird mit einer Kaffeemaschine gelöst, die die im kennzeichnenden Teil des Patentanspruches 1 aufgeführten Merkmale enthält.

Die erfindungsgemässe Kaffeemaschine weist einen modulartigen Aufbau auf. Das erste aus der Maschine herausnehmbare Modul ist aus zwei trennbaren Teilmodulen aufgebaut. Das erste Teilmodul umfasst die Brüheinrichtung mit allen der Verschmutzung durch Kaffeepulver und/oder durch das fertige Getränk unterworfenen Teilen. Im zweiten Teilmodul ist der Antriebsmotor mit einem Getriebe in einem im wesentlichen spritzwasserdichten Gehäuse untergebracht. Ein Steckanschluss, der am Gehäuse des zweiten Teilmodules angeordnet ist, ist für die Zuführung der elektrischen Energie an den Antriebsmotor, einen Elektromotor, bestimmt. Nach dem Herausziehen des ersten Moduls aus der Kaffeemaschine kann die Funktion der Brüheinrichtung für Service- und Reparaturzwecke jederzeit überprüft werden. Zum Reinigen der verschmutzten Teile der Brüheinrichtung können die beiden Teilmodule voneinander getrennt werden. Die Brüheinrichtung kann dann unter einem Wasserstrahl abgespült werden, ohne dass die Gefahr besteht, dass dadurch elektrische oder elektromechanische Teile nass werden.

Besonders vorteilhaft ist es, wenn auch die restlichen Teile der Kaffeemaschine zu weiteren, leicht ausbaubaren Modulen zusammengefasst sind.
Im folgenden ist ein Ausführungsbeispiel der Erfindung anhand von Figuren näher beschrieben. Es zeigen
- **Fig. 1**: eine Seitenansicht der Kaffeemaschine, wobei er dem Betrachter zugewandte Gehäuseseitenteil entfernt ist,
- **Fig. 2**: eine Frontansicht der Maschine mit herausgezogenem ersten Modul,
- **Fig. 3**: das aus der Kaffeemaschine entfernte erste Modul, aufgeteilt ist zwei Teilmodule und
- **Fig. 4**: zu einem weiteren Modul zusammengefasste Steuer- und Heizorgane für die erfindungsgemässe Kaffeemaschine.

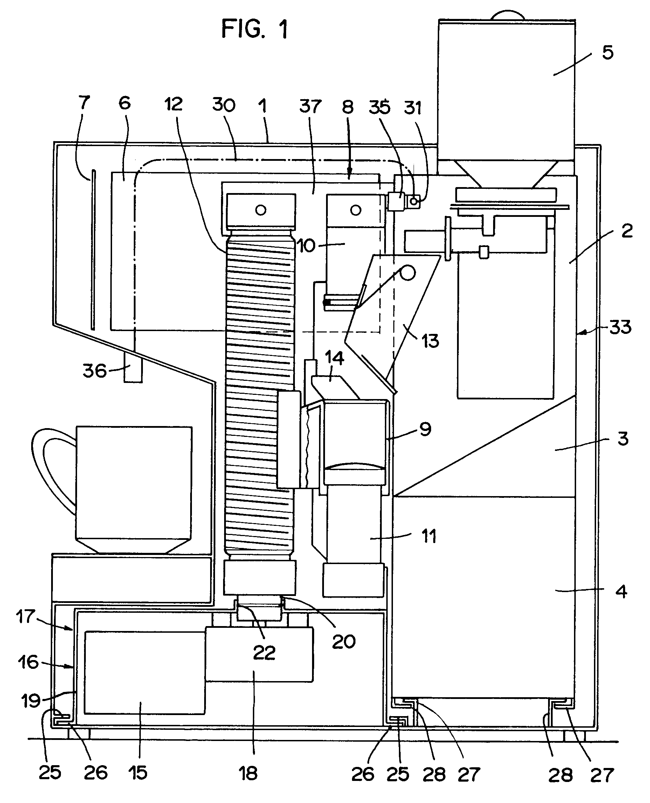

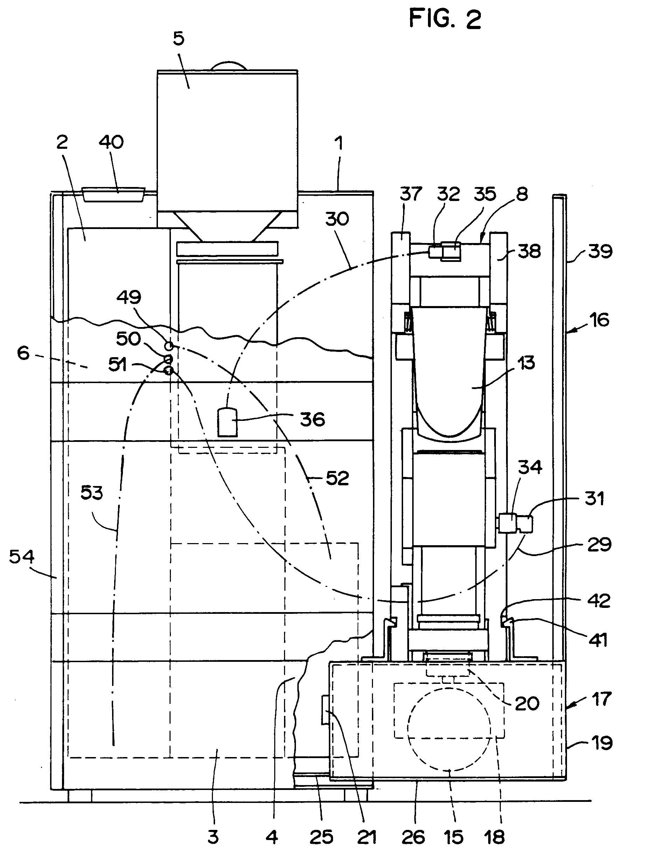

Die in den Figuren 1 und 2 gezeigte Kaffeemaschine ist von einem Gehäuse 1 umfasst. In diesem enthalten sind ein Frischwasserbehälter 2, ein Kaffeesatzbehälter 3 und ein Restwasserbehälter 4. Der erstgenannte Behälter ist über eine Frischwassereinfüllöffnung 40, welche oben am Gehäuse angeordnet ist, auf- und nachfüllbar. Ein Mahlwerk 5, dessen Kaffeebohnenbehälter aus dem Gehäuse 1 herausragt, ist ebenfalls enthalten. Im weiteren weist die Kaffeemaschine Steuer- und Heizorgane auf, die in diesen Figuren zusammenfassend mit dem Bezugszeichen 6 bezeichnet sind. Eine detaillierte Angabe der einzelnen Organe ist weiter hinten gegeben. Eine Steuerplatine 7, vorzugsweise eine Leiterplatte bestückt mit elektronischen Bauelementen, ist als Steuereinheit zum Steuern der Kaffeemaschine bestimmt. Eine Brüheinheit 8 umfasst einen Brühzylinder 9, einen oberen oder ersten Kolben 10, einen unteren oder zweiten Kolben 11 sowie eine um ihre Längsachse drehbare Antriebsspindel 12, deren äussere Mantelfläche beispielsweise mit einem Trapezgewinde versehen ist. Die Antriebsspindel 12 ist an ihren beiden Enden drehbar gelagert. Der Brühzylinder 9 weist auf seiner der Antriebsspindel 12 zugewandten Seite eine Ausbildung auf, die mit dem genannten Gewinde der Antriebsspindel in Eingriff steht. Durch das Drehen der letzteren wird der Brühzylinder 9 je nach Drehrichtung nach oben in Richtung des oberen Kolbens 10 oder nach unten bewegt. Der untere Kolben 11 wird im wesentlichen vom Brühzylinder 9 bei dessen Aufwärtsbewegung mitgeschleppt. Die in der Fig. 1 dargestellte Stellung der Brüheinrichtung 8 ist die sogenannte Einfüllstellung. Vom Mahlwerk 5 gemahlener Kaffee gelangt pulverförmig über eine Kaffeezuführeinrichtung 13 in den oben offenen Brühzylinder 9. Nach dem Einfüllvorgang wird der letztere, angetrieben von der Antriebsspindel 12, nach oben über den oberen Kolben 10 geführt, wobei im Brühzylinder 9 eine Brühkammer gebildet wird. Ueber eine erste Flüssigkeitsleitung 29 und einen ersten Anschlussnippel 34 gelangt Heisswasser unter Druck in die gebildete Brühkammer. Das Wasser verlässt die letztere nach dem Durchströmen des Kaffeepulvers über einen zweiten Anschlussnippel 35, an den eine zweite Flüssigkeitsleitung 30 angeschlossen ist. Das dem zweiten Anschlussnippel 35 abgewandte Ende der letztgenannten Flüssigkeitsleitung mündet in eine Getränkeabgabedüse 36, durch welche der frisch gebrühte Kaffee in eine darunter angeordnete Tasse fliesst. Am Ende des Brühvorganges wird der Brühzylinder 9 durch Drehen der Antriebsspindel 12 in der entgegengesetzten Richtung nach unten bewegt, wobei der untere Kolben 11 durch in den Figuren nicht dargestellte Reibungselemente allmählich in den Bereich des oberen Randes des Brühzylinders 9 gelangt. Das ausgelaugte Kaffeepulver liegt auf der Oberfläche des unteren Kolbens 11 auf und kann dann durch eine Ausstossvorrichtung 14 von diesem abgestreift und in den Kaffeesatzbehälter gefördert werden. Durch teilweises Aufwärtsbewegen des Brühzylinders 9, wobei der untere Kolben 11 durch die vorgenannten, nicht dargestellten Reibungselemente vorerst an einer Aufwärtsbewegung gehindert wird, wird die in der Fig. 1 dargestellte Einfüllstellung wieder erreicht.

Die vorgenannten Teile der Brüheinrichtung 8 sind zwischen einer ersten und zweiten Seitenwange 37, 38 angeordnet. Der Uebersichtlichkeit halber ist in der Fig. 1 die zweite Seitenwange 38 weggelassen. Die Brüheinrichtung 8 umfasst alle diejenigen Teile, die mit dem Kaffeepulver und/oder dem fertigen Kaffee in Berührung kommen und dadurch einer Verschmutzung unterliegen. Alle diese Teile sind vorzugsweise aus Kunststoff gefertigt und demzufolge keiner Korrosion unterworfen.

Das untere Ende der Antriebsspindel 12 erstreckt sich über eine Antriebsachse 20, die aus einem weiteren Gehäuse 19 über eine mit einem Abdichtmittel 22, beispielsweise einem O-Ring, abgedichtete Oeffnung herausragt. Im weiteren Gehäuse 19 sind ein Motor 15, vorzugsweise ein Elektromotor, an den ein Getriebe 18 angekoppelt ist, untergebracht. Die vorgenannte Antriebsachse 20 erstreckt sich vom Getriebe durch die genannte abgedichtete Oeffnung in den unteren Endbereich der Antriebsspindel 12 hinein. Der Elektromotor 15 ist vom weiteren Gehäuse 19 gegen Spritzwasser geschützt umschlossen.

In der erfindungsgemässen Kaffeemaschine ist ein erstes Modul 16 gebildet, welches seinerseits aus einem ersten Teilmodul, der Brüheinrichtung 8 und einem zweiten Teilmodul 17, das im wesentlichen den Motor 15, das Getriebe 18 mit der Achse 20 und das diese Komponenten umschliessende weitere Gehäuse 19 aufweist, besteht. Am weiteren Gehäuse 19 sind auf zwei sich gegenüberliegenden Seiten je eine sich vom Gehäuse wegerstreckende Gleitschiene 26 angeordnet. Jede dieser Gleitschienen greift in Führungsschienen 25, die am Gehäuse 1 der Maschine ausgebildet sind, ein, derart, dass ein Herausziehen des ersten Modules 16 aus der Kaffeemaschine ermöglicht wird. Die herausgezogene Position dieses ersten Modules ist in der Fig. 2 gezeigt. Ein erster Gehäuseseitenteil 39 des Gehäuses 1 kann beispielsweise am genannten weiteren Gehäuse 19 des zweiten Teilmodules 17 befestigt sein. Er öffnet beim Herausziehen des ersten Modules 16 aus der Kaffeemaschine gleichzeitig das Gehäuse 1 und macht dieses für die darin verbliebenen Teile zugänglich. Es ist dabei selbstverständlich, dass die erste und die zweite Flüssigkeitsleitung 29, 30 je in einer solchen Länge ausgeführt sind, dass das Herausziehen des ersten Modules 16 nicht behindert wird. Am weiteren Gehäuse 19 ist ein Steckeranschluss 21 vorgesehen, durch welchen über in den Figuren nicht dargestellte elektrische Verbindungen die notwendige Antriebsenergie an den Motor 15 zugeführt wird. Es ist dadurch möglich, dass auch im herausgezogenen Zustand des ersten Modules 16 die Brüheinrichtung 8 antreibbar und deren Funktionstüchtigkeit überprüfbar ist. Dies ist, wie bereits einleitend gesagt, ein wesentlicher Vorteil für den Wartungs- und den Reparaturdienst.

Aus der Fig. 2 geht im weiteren hervor, dass die erste Flüssigkeitsleitung 29 vom genannten ersten Anschlussnippel 34 zu einem Anschluss 51, der zu einem weiteren Teilmodul 6 zusammengefassten Steuer- und Heizorgane reicht. Eine Frischwasserleitung 53 erstreckt sich vom unteren Ende des Frischwasserbehälters 2 zu einem Frischwasseranschluss 50 des weiteren Teilmodules 6. Eine Restwasserleitung 52 ragt von einem Restwasseranschluss 49 des weiteren Modules 6 in den Restwasserbehälter 4 hinein.

Ein besonders vorteilhafter Aufbau der Kaffeemaschine ist dadurch gegeben, dass der Frischwasserbehälter 2, der Kaffeesatzbehälter 3 und der Restwasserbehälter 4 zu einem zweiten Modul 33 zusammengefasst sind. In ähnlicher Weise wie das erste Modul 16 ist das zweite Modul 33 mittels Gleit- und Führungsschienen 27, 28 ebenfalls aus der Kaffeemaschine herausziehbar und zwar zusammen mit dem zweiten Gehauseseitenteil 54, auf der dem ersten Gehäuseseitenteil 39 abgewandten Seite der Kaffeemaschine. Besonders vorteilhaft ist es, wenn das weitere Teilmodul 6 ein entfernbarer Teil des zweiten Modules 33 ist.

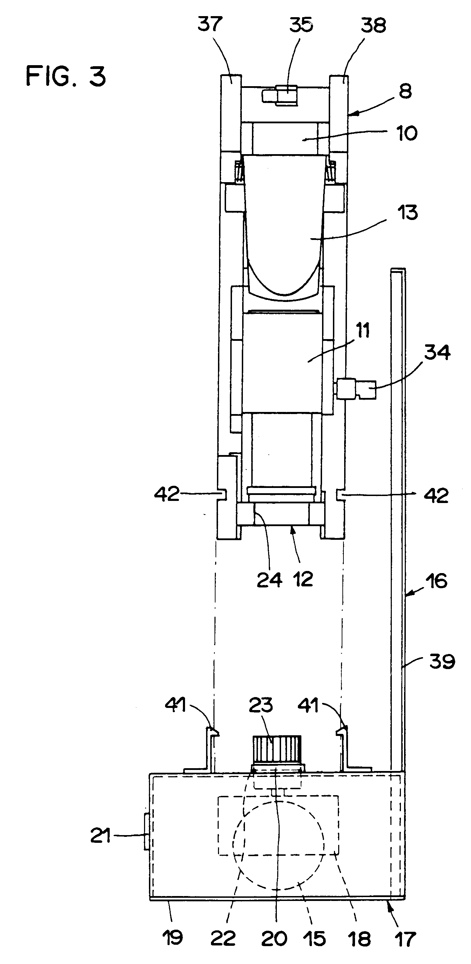

Die beiden genannten Flüssigkeitsleitungen 29, 30 sind über erste und zweite Kopplungsmittel 31, 32, beispielsweise Anschlussclipse, an die ersten und zweiten Anschlussnippel 34, 35 der Brüheinrichtung 8 anschliessbar und lösbar angeordnet. Nach Lostrennen der Flüssigkeitsleitungen 29, 30 von der Brüheinrichtung 8 und dem Trennen der nicht gezeigten elektrischen Leitung vom Steckeranschluss 21, kann das erste Modul 16, so wie dies in der Fig. 3 gezeigt ist, vollständig aus der Kaffeemaschine entfernt werden. Das erste Teilmodul, die Brüheinrichtung 8, ist mit Federbügeln 41, die am weiteren Gehäuse 19 des zweiten Teilmodules 17 befestigt sind, und die in entsprechend angeordnete Kerben in den beiden Seitenwangen 37, 38 der Brüheinrichtung 8 eingreifen, festgehalten. Die Brüheinrichtung 8 lässt sich durch ein seitliches Ausrasten der Federbügel 41 aus den Kerben 42 vom zweiten Teilmodul 17 trennen. Es wird dabei sichtbar, dass der der Antriebsspindel 12 zugewandte Endbereich der Antriebsachse 20 mit ersten Antriebsmitteln 23, beispielsweise mit einer Aussenverzahnung versehen ist, welche Antriebsmittel bei aufgesetzter Brüheinrichtung 8 mit zweiten Antriebsmitteln 24, beispielsweise einer Innenverzahnung des unteren Endbereiches der hohl ausgeführten Antriebsspindel in Eingriff sind. Das vom zweiten Teilmodul 17 getrennte erste Teilmodul 8, das wie gesagt alle einer Verschmutzung durch Kaffeepulver und/oder durch Kaffee unterworfenen Teile umfasst, kann auf diese Weise bequem unter einem Wasserstrahl abgespült und gereinigt werden, ohne dass dabei die Gefahr besteht, dass irgendwelche elektrischen Bauteile nass werden. Die Erkenntnis erscheint wesentlich, dass zum Reinigen der Brüheinrichtung keine eigentlichen Demontagevorgänge, wie das Lösen von Schrauben, so wie dies bei anderen Maschinen üblich ist, notwendig sind. Selbst jede Hausfrau wird in die Lage versetzt, diese periodisch notwendigen Reinigungsarbeiten eigenhändig vorzunehmen.

In einer ähnlich einfachen Weise können lediglich durch Herausziehen des zweiten Modules 33 die vorgenannten Behälter 2, 3, 4 gereinigt werden. Falls das weitere Teilmodul 6 und die Steuerplatine 7 ebenfalls Bestandteile des zweiten Modules 33 sind, empfiehlt es sich, diese beiden letztgenannten Teile in wasserdichten Gehäusen anzuordnen und beispielsweise mittels einer Schnappvorrichtung eine Trennmöglichkeit vom zweiten Modul 33 vorzusehen.

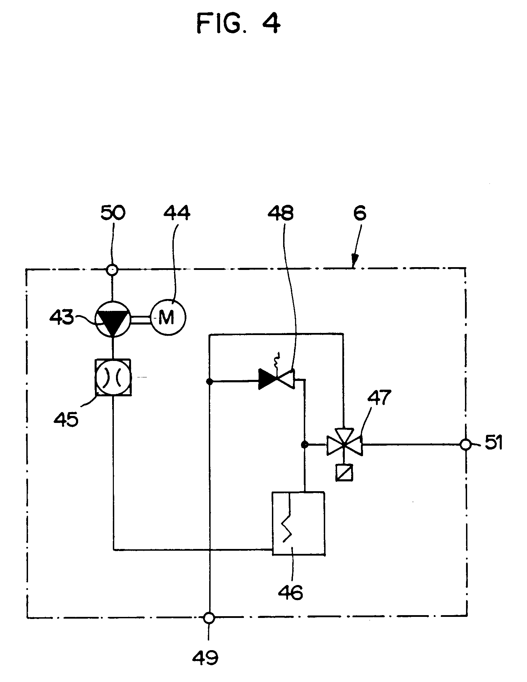

In der Fig. 4 sind der Vollständigkeit halber die zu einem weiteren Modul 6 zusammengefassten Steuer- und Heizorgane der Kaffeemaschine symbolisch dargestellt. Vom Frischwasseranschluss 50 gelangt das Frischwasser über eine Frischwasserpumpe 43, welche von einem Frischwasserpumpenmotor 44 angetrieben ist, über ein Wasserdosierorgan 45 an ein Heisswasseraufbereitungsorgan 46. Das aufgeheizte Frischwasser verlässt das letztgenannte Organ und gelangt über ein Brühventil 47 zum Anschluss 51 für die erste Flüssigkeitsleitung 29. Um ein Nachtropfen der Getränkeabgabedüse zu vermeiden, kann nach dem Schliessen des elektrisch angesteuerten Brühventiles 47 allfälliges Restwasser über den Anschluss 49 für die Restwasserleitung zum Restwasserbehälter abfliessen. Ein Ueberdruckventil 48 öffnet bei einem vorhandenen zu hohen Druck, so dass das Heisswasser direkt in den Restwasserbehälter gelangen kann.

## Patentansprüche

1. Kaffeemaschine mit einem Gehäuse (1), einem Frischwasserbehälter (2), einem Mahlwerk (5), Steuer- und Heizorganen (6) zum Aufheizen und Zuführen von Frischwasser ab dem Frischwasserbehälter an eine Brüheinrichtung (8), mit einem Motor (15) zum Antreiben der Brüheinrichtung, mit einem ersten Modul (16), das aus der Maschine herausziehbar ist und welches mindestens die Brüheinrichtung und den Motor umfasst, wobei die Brüheinrichtung im herausgezogenen Zustand des ersten Modules vom Motor weiterhin antreibbar ist, dadurch gekennzeichnet, dass das erste Modul (16) zwei Teilmodule (8, 17) umfasst, dass das erste Teilmodul (8) die Brüheinrichtung mit den einer starken Verschmutzung durch den Kaffee unterworfenen Teilen aufweist, nämlich einen Brühzylinder (9), zwei Kolben (10, 11), eine Antriebsspindel (12), eine Kaffeezuführeinrichtung (13) und eine Ausstossvorrichtung (14) zum Entfernen des ausgelaugten Kaffeepulvers aus der Brüheinrichtung, wobei der Brühzylinder über die Antriebsspindel vom Motor antreibbar ist und der Brühzylinder sowie die beiden Kolben auf einer gemeinsamen Längsachse angeordnet und relativ zueinander verschiebbar sind, dass das zweite Teilmodul (17) mindestens den Motor (15) und ein Getriebe (18) aufweist, und dass die beiden Teilmodule (8, 17) mit einer Steckverbindung (23, 24) miteinander verbunden und mit Einrastmitteln (41, 42) zusammengehalten sind.

2. Kaffeemaschine nach Anspruch 1, dadurch gekennzeichnet, dass das zweite Teilmodul (17) von einem weiteren Gehäuse (19) umfasst ist, in welchem der Motor (15) und das Getriebe (18) im wesentlichen geschützt von Spritzwasser enthalten sind, wobei eine Achse (20) zum Antreiben der Antriebsspindel (12) aus dem weiteren Gehäuse (19) herausragt.

3. Kaffeemaschine nach Anspruch 1 oder 2, dadurch gekennzeichnet, dass das zweite Teilmodul (17) einen Steckeranschluss (21) aufweist, über welchen die Antriebsenergie für den Motor (15) zuführbar ist.

4. Kaffeemaschine nach Anspruch 2 oder 3, dadurch gekennzeichnet, dass an der Durchführungsstelle der Achse (20) durch das weitere Gehäuse (19) des zweiten Teilmoduls (17) Abdichtmittel (22) vorhanden sind.

5. Kaffeemaschine nach einem der Ansprüche 2 bis 4, dadurch gekennzeichnet, dass der aus dem weiteren Gehäuse (19) des zweiten Teilmoduls (17) herausragende Endbereich der Achse (20) mit ersten Antriebsmitteln (23) versehen ist, welche mit zweiten Antriebsmitteln (24), die an der Antriebsspindel (12) angeordnet sind, in einem lösbaren Eingriff sind.

6. Kaffeemaschine nach einem der Ansprüche 1 bis 6, dadurch gekennzeichnet, dass am Maschinengehäuse (1) Führungsschienen (25) ausgebildet sind, in welche am weiteren Gehäuse (19) des zweiten Teilmoduls (17) vorhandene Gleitschienen (26) eingreifen, derart, dass das erste Modul (16) aus der Kaffeemaschine herausschiebbar ist.

7. Kaffeemaschine nach einem der Ansprüche 1 bis 6, dadurch gekennzeichnet, dass an die Brüheinrichtung (8) reichende Flüssigkeitsleitungen (29, 30) an ihren einen Enden mit Kopplungsmitteln (31, 32) zum Lösen bzw. Anschliessen der Flüssigkeitsleitungen (29, 30) von bzw. an die Brüheinrichtung (8) versehen sind.

8. Kaffeemaschine nach einem der Ansprüche 1 bis 7, dadurch gekennzeichnet, dass ein zweites, aus der Maschine herausnehmbares Modul (33) vorhanden ist, in welchem der Frischwasserbehälter (2), ein Kaffeesatzbehälter (3) und ein Restwasserbehälter (4) angeordnet sind.

9. Kaffeemaschine nach Anspruch 8, dadurch gekennzeichnet, dass das zweite Modul (33) ein weiteres Teilmodul (6), in dem die Steuer- und Heizorgane angeordnet sind, umfasst.

## Claims

1. Coffee machine with a housing (1), a fresh water receptacle (2), a mill work (5), control and heating elements (6) to heat and convey fresh water from the fresh water receptacle to a brewing device (8), with a motor (15) to drive the brewing device, with a first module (16) which can be pulled out of the machine and which comprises at least the brewing device and the motor, the brewing device remaining drivable by the motor when the first module is in the pulled out state, characterized in that the first module (16) comprises two submodules (8, 17), in that the first submodule (8) has the brewing device with the parts subjected to heavy soiling by the coffee, namely a brewing cylinder (9), two pistons (10, 11), a driving spindle (12), a coffee feed device (13) and an ejection device (14) for removal of the leached coffee powder from the brewing device, the brewing cylinder being drivable by the motor via the driving spindle and the brewing cylinder as well as the two pistons being disposed on a common longitudinal axis and being displaceable relative to one another, in that the second submodule (17) has at least the motor (15) and a gearing (18), and in that the two submodules (8, 17) are connected to one another by a plug-in connection (23, 24) and are held together with engagement means (41, 42).

2. Coffee machine according to claim 1, characterized in that the second submodule (17) is enclosed by a further housing (19) in which are contained the motor (15) and the gearing (18), protected essentially from splashing water, a shaft (20) projecting out of the further housing (19) for driving the driving spindle (12).

3. Coffee machine according to claim 1 or 2, characterized in that the second submodule (17) has a plug connection (21) through which the driving energy for the motor (15) can be supplied.

4. Coffee machine according to claim 2 or 3, characterized in that sealing means (22) are provided at the point of passage of the shaft (20) through the further housing (19) of the second submodule (17).

5. Coffee machine according to one of the claims 2 to 4, characterized in that the end area of the shaft (20), projecting out of the further housing (19) of the second submodule (17), is provided with first driving means (23), which are detachably engaged to second driving means (24), which are disposed on the driving spindle (12).

6. Coffee machine according to one of the claims 1 to 6, characterized in that guide rails (25) are formed on the machine housing (1) in which engage sliding rails (26) present on the further housing (19) of the second submodule (17) in such a way that the first module (16) can be pulled out of the coffee machine.

7. Coffee machine according to one of the claims 1 to 6, characterized in that the liquid pipes (29, 30) reaching to the brewing device (8) are provided with coupling means (31, 32) on their ends for detaching or connecting, respectively, the liquid pipes (29, 30) to or from, respectively, the brewing device (8).

8. Coffee machine according to one of the claims 1 to 7, characterized in that there is a second module (33) removable from the machine in which module a fresh water receptacle (2), a coffee grounds receptacle (3) and a residual water receptacle (4) are disposed.

9. Coffee machine according to claim 8, characterized in that the second module (33) comprises a further submodule (6) in which submodule the control and heating elements are disposed.

## Revendications

1. Machine à café avec un boîtier (1), un récipient pour l'eau fraîche (2), un moulin (5), des organes de contrôle et de chauffage (6) pour chauffer et conduire l'eau fraîche depuis le récipient pour l'eau fraîche jusqu'à un dispositif d'infusion (8), avec un moteur (15) pour actionner le dispositif d'infusion, avec un premier module (16) qui peut être tiré hors de la machine et qui comprend au moins le dispositif d'infusion et le moteur, le dispositif d'infusion pouvant toujours être actionné par le moteur lorsque le premier module est extrait, caractérisée en ce que le premier module (16) comprend deux modules partiels (8, 17), le premier module partiel (8) comprenant le dispositif d'infusion avec les parties soumises à un fort salissement par le café, c'est-à-dire un cylindre d'infusion (9), deux pistons (10, 11), une vis d'entraînement (12), un dispositif d'apport de café (13) et un dispositif de débourrage (14) pour débarrasser la poudre de café infusée hors du dispositif d'infusion, le cylindre d'infusion pouvant être actionné par le moteur par l'intermédiaire de la vis d'entraînement, le cylindre d'infusion ainsi que les deux pistons étant placés sur un même axe longitudinal et déplaçables les uns par rapport aux autres, en ce que le deuxième module partiel (17) comprend au moins le moteur (15) et un rouage (18), et en ce que les deux modules parties (8, 17) sont reliés mutuellement par un connecteur (23, 24) et maintenus par des moyens d'encliquetage (41, 42).

2. Machine à café selon la revendication 1, caractérisée en ce que le deuxième module partiel (17) est contenu dans un autre boîtier (19) dans lequel le moteur (19) et le rouage (18) sont pour l'essentiel protégés des éclaboussures d'eau, un axe (20) dépassant de l'autre boîtier (19) pour actionner la vis d'entraînement (12).

3. Machine à café selon la revendication 1 ou 2, caractérisée en ce que le deuxième module partiel (17) présente un connecteur de prise (21) par lequel l'énergie d'entraînement du moteur (15) peut être amenée.

4. Machine à café selon la revendication 2 ou 3, caractérisée par des moyens d'étanchéification (22) prévus au point où l'axe (20) traverse l'autre boîtier (19) du deuxième module partiel (17).

5. Machine à café selon l'une des revendications 2 à 4, caractérisée en ce que l'extrémité de l'axe (20) dépassant de l'autre boîtier (19) du deuxième module partiel (17) est munie de premiers moyens d'actionnement (23) engagés de manière non permanente avec des deuxièmes moyens d'actionnement (24) placés contre la vis d'entraînement (12).

6. Machine à café selon l'une des revendications 1 à 6, caractérisée par des rails de guidage (25) formés contre le boîtier de la machine (1) dans lesquels s'engagent des rails de glissage (26) prévus contre l'autre boîtier (19) du deuxième module partiel, en sorte que le premier module (16) puisse être extrait hors de la machine à café.

7. Machine à café selon l'une des revendications 1 à 6, caractérisée en ce que des conduites pour liquides (29, 30) aboutissant au dispositif d'infusion (8) sont munies à une de leurs extrémités de moyens de couplage (31, 32) pour connecter ou déconnecter les conduites de liquide (29, 30) au ou du dispositif d'infusion (8).

8. Machine à café selon l'une des revendications 1 à 7, caractérisée par un deuxième module (33) pouvant être extrait de la machine, dans lequel sont placés le récipient d'eau fraîche (2), un récipient pour le café (3) et un récipient pour l'eau résiduelle (4).

9. Machine à café selon la revendication 8, caractérisée en ce que le deuxième module (33) comprend un autre module partiel (6) dans lequel sont placés les organes de contrôle et de chauffage.
